# EUROPEAN PATENT APPLICATION

(11) **EP 3 404 272 A1**
(43) Date of publication of application: **21.11.2018**
(21) Application number: 18150550.4
(22) Date of filing: 08.01.2018
(51) Int. Cl.: F15B 1/26, F15B 21/00, A01G 23/081, F15B 11/13

(54) **A SYSTEM FOR INCREASING THE WORKING CAPACITY OF A HYDRAULIC CYLINDER, AND A HYDRAULICALLY-OPERATED GRAB**

(30) Priority: 16.05.2017 FI 20175445
(71) Applicant: Biojack Oy, 64700 Teuva (FI)
(72) Inventor: ASIKAINEN, Janne, 24100 Salo (FI); ASIKAINEN, Unto, 25520 Perniö As (FI)
(74) Representative: Genip Oy

(57) **Abstract**

A system (100) for increasing the working capacity of a hydraulic cylinder (52) comprises:
- a hydraulic cylinder (52), a first connector (54) of which is connectable or has been connected to a hydraulic circulation (55) of a work machine - such as a tractor or excavator - for running a piston (52B) of the hydraulic cylinder (52) by means of hydraulic fluid via the first connector (54) to a first direction, and a second connector (53) of which has been connected to a hydraulic apparatus (1) when the piston (52B) is being run to the first direction for the collection of the hydraulic fluid, which exits the hydraulic cylinder (52), into a tank section (26) of the hydraulic apparatus (1) without counter pressure or at least essentially without counter pressure such as at atmospheric pressure.
- the hydraulic apparatus (1) is connectable or has been connected to the hydraulic circulation (55) for the draining of the hydraulic fluid, which has accumulated in the tank section (26), into a drainage section (25) by means of hydraulic fluid that is run from the hydraulic circulation (55) so that the hydraulic fluid, which exits the tank section (26) into the hydraulic cylinder (52), runs the piston (52B) to said second direction.

## Description

### Field of invention

The invention is related more generally to hydraulically-operated work machines that have at least one hydraulic cylinder. The specific applications of the invention include grabs used in hydraulically-operated work machines and/or especially blades used in these.

### Prior art

The applicant markets wood grabs, loading grabs and harvesters under the product name Biojack®, some of which contain a blade that cuts by pressing, for the cutting of the timber collected. The blade used is most advantageously a cutting knife.

A wood grab, loading grab or harvester movable hydraulically by means of a boom is opened by means of the hydraulic system of a work machine - such as a tractor or excavator - by using a pressurised hydraulic cylinder so that the desired trees can be grabbed into the grab, after which the grab is closed by changing the position of the hydraulic cylinder. After this, the tree trunks in the grab can be cut either by sawing or by turning a possible cutting knife to the cutting position by changing the position of the cutting knife by means of the hydraulic cylinder. Alternatively, the cutting can be carried out by means of an immobile blade, whereby the grab, when it closes, presses the timber against the immobile blade.

After cutting, the cutting knife goes inside the body, a tilt cylinder turns the timber to the loading position and after this the cut timber can be lifted and loaded into a stack.

### Objective of invention

When using a blade that cuts by pressing or an immobile blade for the cutting of timber, it has turned out that the cutting force is rather limited. A hydraulic cylinder is typically used for moving (in other words for turning and/or pressing) a blade that cuts by pressing or for pressing the timber to be cut against an immobile blade. More cutting force can be obtained by increasing the pressure of the hydraulic circulation. However, it is not possible to increase the pressure of the hydraulic circulation sufficiently in most work machines, since the hydraulic pumps typically used in them produce a pressure of 150 - 400 bar, and the safety valves typically used in the valves restrict the pressure used to a range of about 100 - 500 bar.

The first objective of the invention is to increase the working capacity of a hydraulic cylinder (in other words the force and/or speed of the hydraulic cylinder). This objective can be accomplished by means of a system according to the independent claim 1.

The second objective of the invention is to increase the working capacity of a hydraulically-operated grab. This objective can be accomplished by means of a grab according to the independent claim 7.

The dependent claims describe the advantageous and inventive embodiments of the system and grab.

### Advantages of invention

A system for increasing the working capacity of a hydraulic cylinder comprises a hydraulic cylinder, the piston of which is movable to a first direction by means of hydraulic fluid brought via a first connector of the hydraulic cylinder and to a second direction, which is opposite to the first direction, by means of hydraulic fluid brought via a second connector of the hydraulic cylinder.

The first connector of the hydraulic cylinder is connectable or has been connected to the hydraulic circulation of a work machine - such as a tractor or excavator - for running the piston of the hydraulic cylinder by means of hydraulic fluid via the first connector to the first direction. The second connector of the hydraulic cylinder has been connected to a hydraulic apparatus when the piston is being run to the first direction for the collection of the hydraulic fluid, which exits the hydraulic cylinder, into a tank section of the hydraulic apparatus without counter pressure or at least essentially without counter pressure such as at atmospheric pressure.

When, in addition to this, the hydraulic apparatus is connectable or has been connected to the hydraulic circulation for the draining of the hydraulic fluid, which has accumulated in the tank section, into a drainage section by means of hydraulic fluid that is run from the hydraulic circulation so that the hydraulic fluid, which exits the tank section into the hydraulic cylinder, runs the piston to said second direction, it is possible to increase the working capacity of the hydraulic cylinder. In other words, the return line of the hydraulic cylinder is separated from the pressure line of the hydraulic circulation by means of the hydraulic apparatus, and a separate semi-closed hydraulic return that is run with the pressure line is formed for the return circulation. In this way, it is possible in practice to avoid on the return side of the hydraulic cylinder the pressure of the pressure line of the hydraulic circulation, which pressure is normally present as a counter pressure. In tests carried out by the applicant, it has been possible to significantly increase the working capacity of the hydraulic cylinder.

The hydraulic apparatus is connected to the hydraulic cylinder most advantageously via opposite - most preferably adjustable - non-return valves. In this way, it is possible to select and even adjust the sensitivity of the drainage and filling of the hydraulic cylinder so that it is suitable with respect to the hydraulic apparatus. As an example, it is possible to use non-return valves with a pressure range of a max. of 500 bar and an oil production of a max. of 400 litres per minute.

When the system further comprises a blade that cuts by pressing and where the piston has been adapted, when it moves in the first direction, to turn the blade to the cutting direction of the blade, and when it moves in the second direction, to turn the blade away from the cutting direction of the blade, in which case the hydraulic apparatus reduces the flow resistance of the piston when the blade is being run to the cutting direction, it is possible to increase the working capacity of the blade that cuts by pressing. This is accomplished due to the increased working capacity of the hydraulic cylinder.

When the system further comprises a loading grab or a hydraulically-operated grab applicable to the handling of timber, and when the piston has been adapted, when it moves in the first direction, to close the grab, and when it moves in the second direction, to open the grab, the hydraulic apparatus reduces the flow resistance of the piston when the grab is being closed. In this way, it is possible to increase the compression capacity of the grab.

In addition to these or instead of these, the system can comprise an immobile blade, against which the timber to be cut is pressed. In this way, it is possible to increase the force of the work device. Most advantageously, the timber to be cut is pressed against the immobile blade when the grab is being closed or opened. In this way, the hydraulic apparatus advantageously reduces the flow resistance of the piston when the work device is being moved to the working direction.

A hydraulically-operated grab according to the second aspect of the invention can contain a system according to the first claim of the invention.

In this case, the hydraulic apparatus has advantageously been adapted to receive hydraulic fluid from the hydraulic cylinder to reduce the flow resistance of the piston when the blade is being run to the cutting direction and to return hydraulic fluid into the hydraulic cylinder to run the blade against the cutting direction.

In addition to this or as an alternative to this, the hydraulic apparatus can be adapted to receive hydraulic fluid from the piston to reduce the flow resistance of the piston when the grab is being closed or opened.

The grab is most advantageously applicable to the collection of timber, and it most preferably contains a blade applicable to the cutting of timber, which blade can be a blade that cuts by pressing or an immobile blade.

### List of drawings

In what follows, the invention is presented in more detail by means of the exemplary embodiments described in the enclosed drawings. Of the drawings:
- FIG 1: shows a diagram of the functioning of the system;
- FIG 2: shows the cross-section of a hydraulic apparatus installed in a hydraulically-operated grab that is applicable to the harvesting of energy timber cut by means of a pressed blade, which grab is shown in FIG 3;
- FIG 3: shows a hydraulically-operated grab;
- FIG 4: shows the grab shown in FIG 3 viewed from the right side;
- FIG 5: shows the grab shown in FIG 3 viewed from the left side;
- FIG 6: shows the grab shown in FIG 3 viewed from above;
- FIG 7: shows the grab shown in FIG 3 viewed from below; and
- FIG 8: shows the grab shown in FIG 3 viewed from front.

The same reference numbers refer to the same technical parts in all drawings.

### Detailed description of the invention

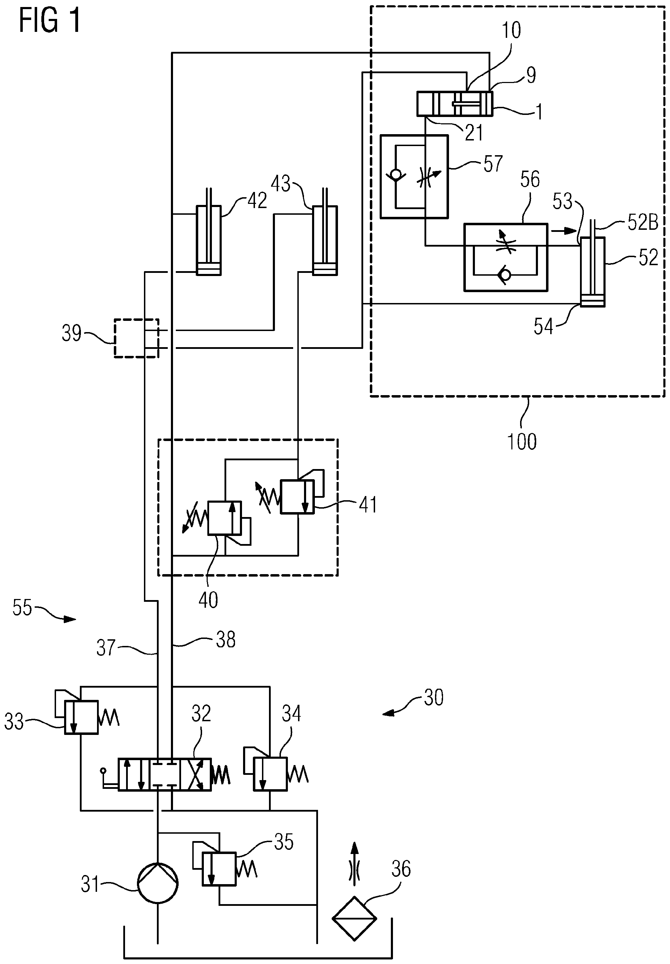

FIG 1 shows a diagram of the functioning of a system 100 intended for increasing the working capacity of a hydraulic cylinder 52 (in other words for increasing the force and/or speed of movement generated by the hydraulic cylinder 52). The system 100 is presented as part of a hydraulic power unit 30, which has been connected to the hydraulic circulation 55 of a work machine (such as an excavator or tractor).

The system 100 comprises a hydraulic cylinder 52, the piston 52B of which is movable to a first direction by means of hydraulic fluid brought via a first connector 54 of the hydraulic cylinder 52 and to a second direction, which is opposite to the first direction, by means of hydraulic fluid brought via a second connector 53 of the hydraulic cylinder 52.

The first connector 54 of the hydraulic cylinder 52 is connectable or has been connected to the hydraulic circulation 55 (to a first pressure line 37) of a work machine - such as a tractor or excavator - for running the piston 52B of the hydraulic cylinder 52 by means of hydraulic fluid via the first connector 54 to the first direction.

The second connector 53 of the hydraulic cylinder 52 has been connected to a hydraulic apparatus 1 when the piston 52B is being run to the first direction for the collection of the hydraulic fluid, which exits the hydraulic cylinder 52, into a tank section 26 of the hydraulic apparatus 1 without counter pressure or at least essentially without counter pressure such as at atmospheric pressure.

The hydraulic apparatus 1 is connectable or has been connected to the hydraulic circulation 55 (to a second pressure line 38) for the draining of the hydraulic fluid, which has accumulated in the tank section 26, into a drainage section 25 by means of hydraulic fluid that is run from the hydraulic circulation 55 so that the hydraulic fluid, which exits the tank section 26 into the hydraulic cylinder 52, runs the piston 52B to said second direction.

In other words, the first connector 54 of the hydraulic cylinder 52 is connected to the first pressure line 37, but the second connector 53 is not connected to the second pressure line 38, but instead it is separated from the second pressure line 38 via the hydraulic apparatus 1. In this way, the hydraulic cylinder 52 is connected to the hydraulic circulation 55 on its one side only, when on the other side the hydraulic cylinder 52 and the tank section 26 of the hydraulic apparatus form a closed hydraulic circulation between the two of them.

The hydraulic fluid that is brought from the hydraulic cylinder 52 during the working cycle of the pressure line 37 into the hydraulic cylinder 52 deviates the piston 52B, which displaces hydraulic fluid from the volume of the hydraulic cylinder 52 into the tank section 26. Since the tank section 26 is without counter pressure or at least essentially without counter pressure at least with respect to the second pressure line 38 of the hydraulic circulation 55, it is possible to increase the force generated by the hydraulic cylinder 52 as compared to a situation where the hydraulic cylinder 52 was run via the connector 54 from the first pressure line 37 so that the connector 53 would be connected to the second pressure line 38 of the hydraulic circulation 55. The reason for this is that even the second pressure line 38 of the hydraulic circulation 55 is normally pressurised when the hydraulic circulation 55 is in operation.

The hydraulic apparatus 1 is connected to the hydraulic cylinder 52 most advantageously via opposite - most preferably adjustable - non-return valves 56, 57. In this way, it is possible to adjust the sensitivity of the drainage and filling of the hydraulic cylinder 52 so that it is suitable with respect to the hydraulic apparatus 1.

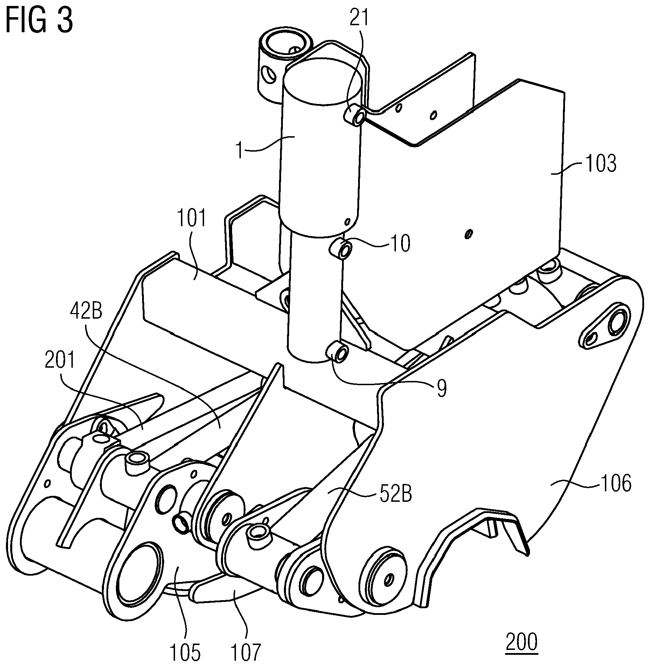

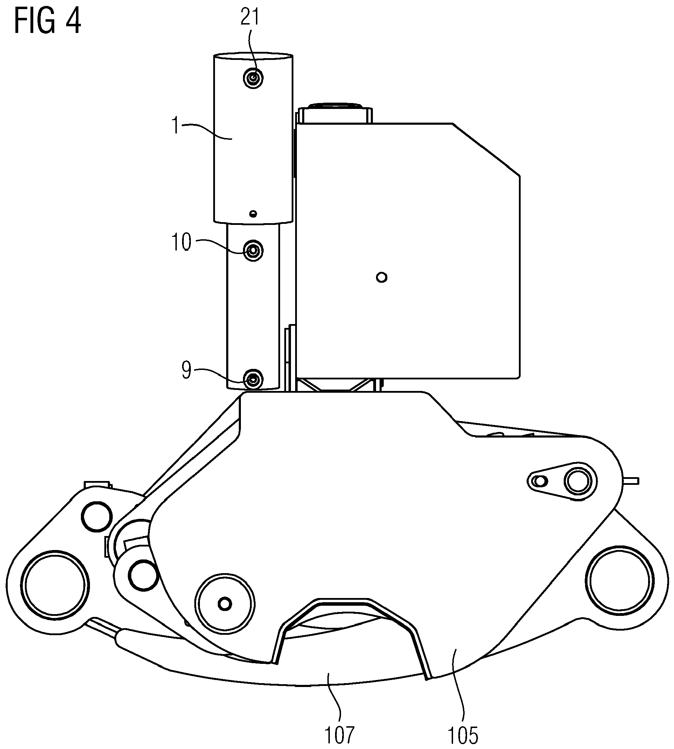

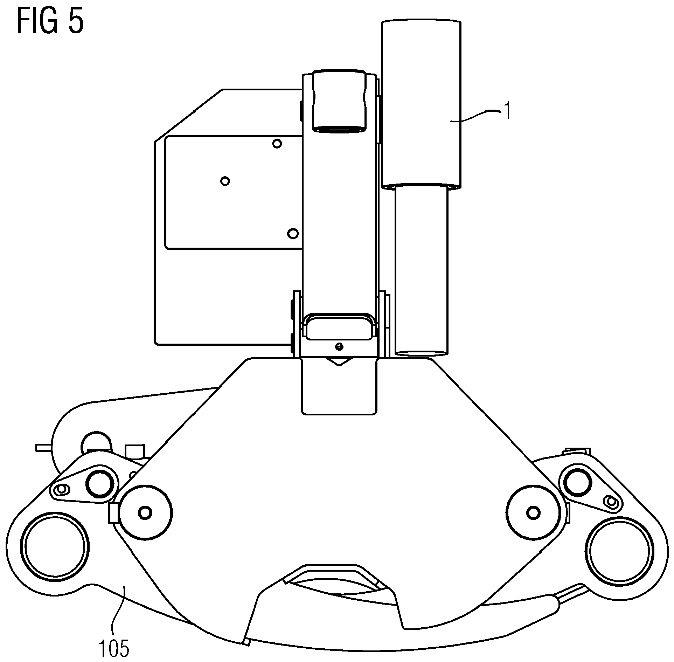

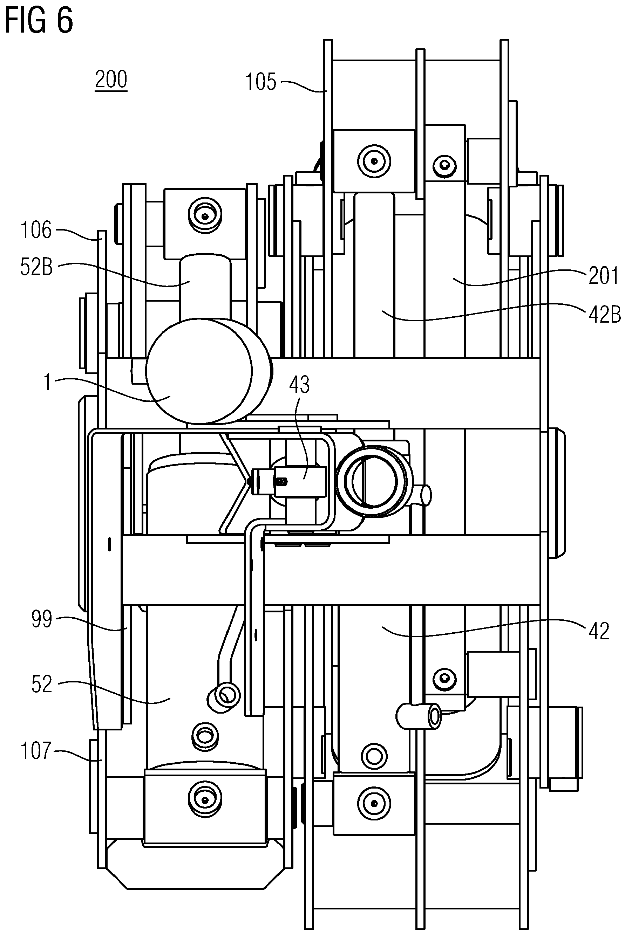

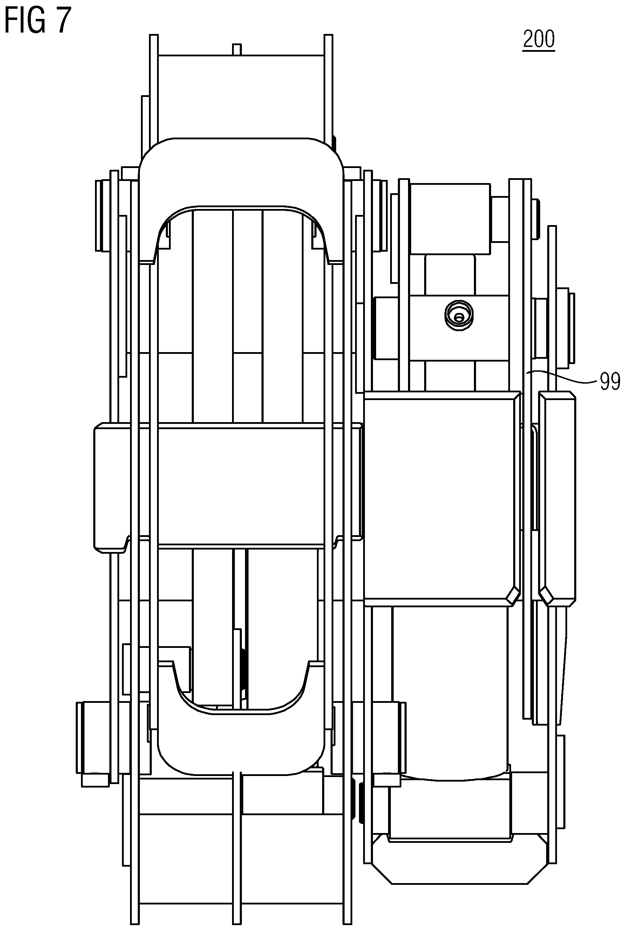

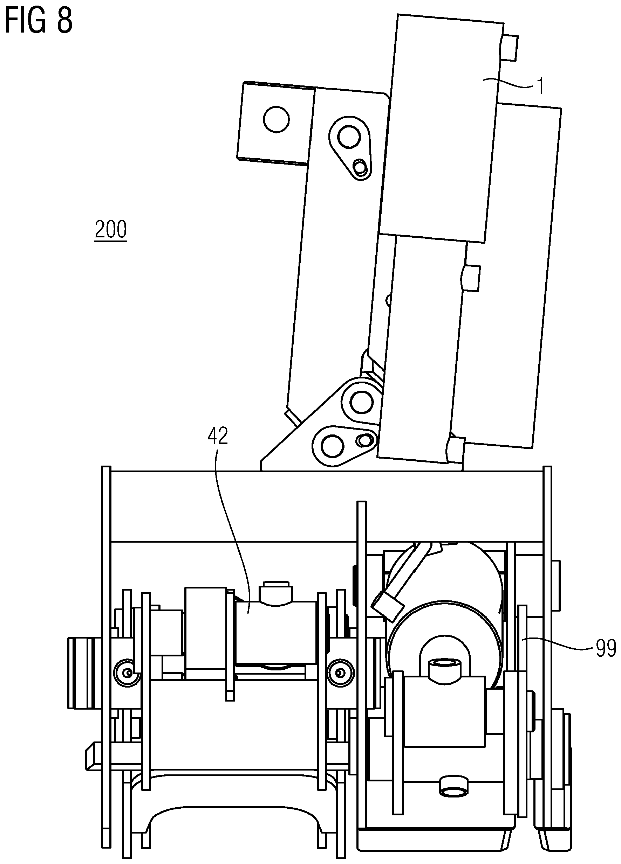

The drawing FIG 1 also presents the hydraulic circulation 55 of a hydraulically-operated grab 200 usable with pressure circulation, in other words the hydraulic circulation 55 of a hydraulically-operated grab 200 equipped with a pressed blade 99, which grab 200 is shown in FIG 3 (also see FIG 4 - 8), which hydraulic circulation 55 has been connected to the hydraulic power unit 30 of the work machine.

The grab 200 comprises i) a hydraulic circulation 55, which has a first pressure line 37 and a second pressure line 38. Moreover, the grab 200 has a hydraulic cylinder 52, which has been fastened so that it turns or presses the pressed blade 99 to the cutting position (when it moves to a first direction) or away from the cutting position (when it moves to a second direction). The blade 99 is most advantageously a knife cutting blade or a guillotine blade. The system 100 has most advantageously been connected or is connectable between the first pressure line 37 and the second pressure line 38. In this way, the grab 200 also comprises a hydraulic apparatus 1, which has been configured to receive hydraulic fluid (in practice oil), which exits the hydraulic cylinder 52 when the pressed blade 99 is being pressed to the cutting direction by the pressure of the first pressure line 37, into the tank section 26 and to return oil by the pressure of the second pressure line 38 from the tank section 26 into the hydraulic cylinder 52.

The first pressure line 37 and the second pressure line 38 have most preferably been connected or are connectable to a hydraulic power unit 30.

The grab 200 most advantageously comprises a hydraulic cylinder 42, which has most advantageously been connected or is connectable to one of the two pressure lines 37, 38 for closing the grabs 105, 107 and to the other pressure line 37, 38 for opening the grabs 105, 107. The hydraulic cylinder 42 can further comprise a non-return valve 39, which has most preferably been connected or is connectable to the first pressure line 37.

Moreover, the grab 200 can comprise a body 101 and at least one hydraulic cylinder 43 (so-called tilt cylinder), which has most advantageously been connected or is connectable to the first pressure line 37 for turning the body 101 with respect to the arm (for reasons of clarity, the arm has been left out of the drawings) to a first position, especially essentially to an angle of 0°, and to the second pressure line 38 for turning the body 101 to a second position of the arm, especially essentially to an angle of 90°. The hydraulic cylinder 43 can further comprise pressure relief valves 40, 41, which have most advantageously been connected or are connectable in parallel to the second pressure line 38.

Most advantageously, the system 100 further comprises a blade 99 that cuts by pressing. The piston 52B has been adapted, when it moves in the first direction, to press or turn the blade 99 to the cutting direction of the blade 99, and when it moves in the second direction, to turn the blade 99 away from the cutting direction of the blade 99, in which case the hydraulic apparatus 1 reduces the flow resistance of the piston 52B when the blade 99 is being run to the cutting direction.

In addition to this or instead of this, the system 100 can be modified so that the hydraulic cylinder 52, which is drained into the hydraulic apparatus 1 on its one side, is used for controlling the opening and closing of the opposite jaws of the grab (grab 105, 107). In this case, the piston 52B would be adapted, when it moves in the first direction, to close the grab 200, and when it moves in the second direction, to open the grab 200, whereby the hydraulic apparatus 1 would reduce the flow resistance of the piston 52B when the grab 200 is being closed.

In addition to or instead of the grab 200 or pressed blade 99, the hydraulic cylinder to be connected to the hydraulic apparatus 1 on its one side can be used for controlling almost any work device that is moved back and forth.

In this case, the path of the work device has most advantageously been arranged so that the work device has a working direction and a return direction, and so that the hydraulic apparatus 1 reduces the flow resistance of the piston 52B when the work device is being moved to the working direction.

As an alternative to a pressed blade 99, the grab 200 can have an immobile blade, against which the timber to be cut is pressed when the grab 200 is being opened or closed. Most advantageously, the pressing is carried out by means of an opposite movement of the grabs 105, 107 when the grab 200 is being opened or closed.

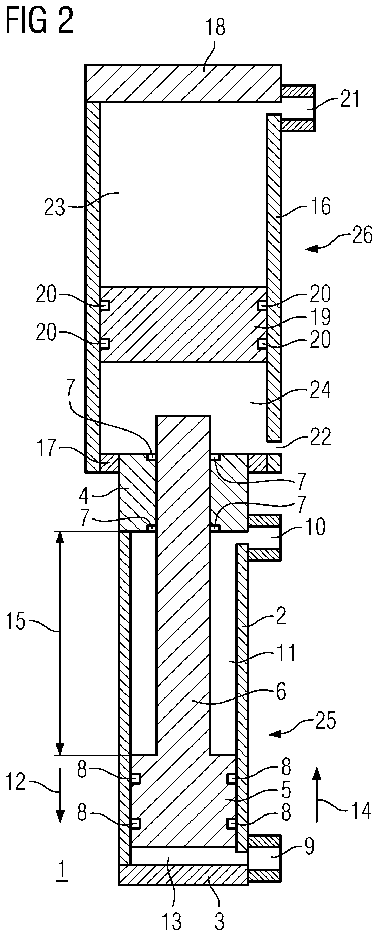

FIG 2 shows a cross-section of the hydraulic apparatus 1. Such hydraulic apparatus is known from the applicant's earlier Finnish patent applications 20155396 and 20165194. With regard to the more detailed structure of the hydraulic apparatus 1, we refer to that which has been described in those applications.

The hydraulic apparatus 1 comprises a tank section 26, which comprises an air-tight liquid space 23 that is in connection with at least one connector 21, the volume of which liquid space 23 is restricted by at least one movable wall 19. The hydraulic apparatus 1 further comprises a drainage section 25, which has been configured in a first operating stage I to accomplish a reduction in the volume of the liquid space 23 by moving the wall 19 and in a second operating stage II to release the wall 19 to enable an increase in the volume of the liquid space 23. In addition to this, the hydraulic apparatus 1 has been arranged in the first operating stage I to return the hydraulic fluid into the hydraulic cylinder 52 via an adjustable non-return valve 56 and in the second operating stage II to receive hydraulic fluid from the hydraulic cylinder 52 via a second non-return valve 57.

The drainage section 25 comprises a cylindrical shell 2 as well as ends 3, 4 at both heads of the shell 2, a movable piston 5 and piston rod 6 between the ends 3, 4 inside the cylindrical shell 2, as well as a connector 10. The connector 10 has been connected or is connectable to the hydraulic circulation 55 to allow the moving of the wall 19, enabling an increase in the volume of the liquid space 23, especially by pushing the movable piston 5 and/or piston rod 6 to avoid the movement of the wall 19. The drainage section 25 further comprises a connector 9, which has been connected or is connectable to the hydraulic circulation 55 to accomplish a reduction in the volume of the liquid space 23 by moving the wall 19, especially by pushing it with the piston 5 and/or piston rod 6. There are seals in the piston 5 between the piston 5 and the shell 2 of the drainage section 26. Moreover, there are seals in the wall 19 between the wall 19 and the shell of the tank section 25 as well as in the end 4 between the end 4 and the piston rod 6. The drainage section 25 is most advantageously a welded structure.

The tank section 26 comprises at least one connector 21, which has/have been connected or is/are connectable to the hydraulic circulation 55 in the first operating stage I to return hydraulic fluid into the hydraulic cylinder 52 via an adjustable non-return valve 56 and in the second operating stage II to receive hydraulic fluid from the hydraulic cylinder 52 via a second adjustable non-return valve 57 as well as an air opening 22 to make the counterpressure of the wall 19 constant.

The tank section 26 and drainage section 26 are most advantageously machined and welded structures. The tank section 25 has most preferably been integrated into the drainage section 25. The drainage section 25 and tank section 26 are most preferably after one another in their longitudinal direction. In this case, the stroke length 15 of the piston 5 of the drainage section 25 has most advantageously been dimensioned so that the piston rod 6 pushes the wall 19 of the tank section 26 so that the wall 19 essentially drains the liquid space 23 of the tank section 26 from overflow oil. The shell 2 of the drainage section 25 and the shell 16 of the tank section 26 are most preferably essentially concentric.

### List of reference numbers used

- 1: hydraulic apparatus
- 2: shell
- 3: end
- 4: end
- 5: piston
- 6: piston rod
- 7: piston seals
- 8: piston rod seals
- 9: connector
- 10: connector
- 11: minus chamber
- 12: minus chamber
- 13: plus chamber
- 14: plus movement
- 15: stroke length
- 16: shell
- 17: end
- 18: end
- 19: wall
- 20: piston seals
- 21: connector
- 22: air opening
- 23: liquid space
- 24: gas space
- 25: drainage section
- 26: tank section
- 30: hydraulic power unit
- 31: hydraulic pump
- 32: directional control valve
- 33: pressure relief valve
- 34: pressure relief valve
- 35: pressure relief valve
- 36: filter
- 37: first pressure line
- 38: second pressure line
- 39: non-return valve
- 40: pressure relief valve
- 41: pressure relief valve
- 42: hydraulic cylinder
- 43: hydraulic cylinder
- 52: hydraulic cylinder
- 52B: piston
- 53: connector
- 54: connector
- 55: hydraulic circulation
- 56: adjustable non-return valve
- 57: adjustable non-return valve
- 99: blade
- 100: system
- 101: body
- 102: oil tank
- 103: protective casing
- 105: grab (left)
- 106: blade guard
- 107: grab (right)
- 200: hydraulically-operated grab
- 201: strut bar

## Claims

1. A system (100) for increasing the working capacity of a hydraulic cylinder (52), **characterised in that** the system (100) comprises:
- a hydraulic cylinder (52), the piston (52B) of which is movable
-- to a first direction by means of hydraulic fluid brought via a first connector (54) of the hydraulic cylinder (52) and
-- to a second direction, which is opposite to the first direction, by means of hydraulic fluid brought via a second connector (53) of the hydraulic cylinder (52) ;
and where:
- the first connector (54) of the hydraulic cylinder (52) is connectable or has been connected to the hydraulic circulation (55) of a work machine - such as a tractor or excavator - for running the piston (52B) of the hydraulic cylinder (52) by means of hydraulic fluid via the first connector (54) to the first direction;
- the second connector (53) of the hydraulic cylinder (52) has been connected to a hydraulic apparatus (1) when the piston (52B) is being run to the first direction for the collection of the hydraulic fluid, which exits the hydraulic cylinder (52), into the tank section (26) of the hydraulic apparatus (1) without counter pressure or at least essentially without counter pressure such as at atmospheric pressure; and
- the hydraulic apparatus (1) is connectable or has been connected to the hydraulic circulation (55) for the draining of the hydraulic fluid, which has accumulated in the tank section (26), into the drainage section (25) by means of hydraulic fluid that is run from the hydraulic circulation (55) so that the hydraulic fluid, which exits the tank section (26) into the hydraulic cylinder (52), runs the piston (52B) to said second direction.

2. A system according to claim 1, where the hydraulic apparatus (1) has been connected to the hydraulic cylinder (52) via opposite - most preferably adjustable - non-return valves (56, 57) .

3. A system according to any one of the preceding claims, where the system further comprises a blade (99) that cuts by pressing and where the piston (52B) has been adapted, when it moves in the first direction, to press or turn the blade (99) to the cutting direction of the blade, and when it moves in the second direction, to turn the blade (99) away from the cutting direction of the blade, in which case the hydraulic apparatus (1) reduces the flow resistance of the piston (52B) when the blade (99) is being run to the cutting direction.

4. A system according to any one of the preceding claims, where the system further comprises a loading grab or a hydraulically-operated grab (200) applicable to the handling of timber, and where the piston (52B) has been adapted, when it moves in the first direction, to close the grab (200), and when it moves in the second direction, to open the grab (200), in which case the hydraulic apparatus (1) reduces the flow resistance of the piston (52B) when the grab (200) is being closed.

5. A system according to claim 4, which system further comprises an immobile blade, against which the timber to be cut is pressed.

6. A system according to claim 4 or 5, where the timber to be cut is pressed against an immobile blade when the grab (200) is being closed or opened.

7. A hydraulically-operated grab (200), which contains a system (100) according to any one of the preceding claims.

8. A hydraulically-operated grab (200) according to claim 7, where the hydraulic apparatus (1) has been adapted to receive hydraulic fluid from the hydraulic cylinder (52) to reduce the flow resistance of the piston (52B) i) when the blade (99) is being run to the cutting direction and to return hydraulic fluid into the hydraulic cylinder (52) to run the blade against the cutting direction.

9. A hydraulically-operated grab (200) according to claim 7 or 8, where the hydraulic apparatus (1) has been adapted to receive hydraulic fluid from the piston (52B) to reduce the flow resistance of the piston (52B) when the grab (200) is being closed or opened.

10. A hydraulically-operated grab (200) according to claim 8 or 9, which grab (200) is applicable to the collection of timber and which contains a blade (99) applicable to the cutting of timber, which blade is a blade (99) that cuts by pressing or an immobile blade.
